# EUROPEAN PATENT SPECIFICATION

(11) **EP 2 279 095 B1**
(45) Date of publication and mention of the grant of the patent: **30.11.2011**
(21) Application number: 08874367.9
(22) Date of filing: 30.10.2008
(51) Int. Cl.: B60P 7/04

(54) **ADJUSTABLE TARPAULIN FOR A TOWER SECTION OF A WIND TURBINE**
VERSTELLBARE PLANE FÜR EINEN TURMABSCHNITT EINER WINDTURBINE
BÂCHE RÉGLABLE POUR UNE PARTIE TOUR D' ÉOLIENNE

(30) Priority: 23.05.2008 US 55501
(43) Date of publication of application: 02.02.2011
(73) Proprietor: Siemens Aktiengesellschaft, 80333 München (DE)
(72) Inventor: HAENISCH, Ringo, DK-7330 Brande (DK)
(86) International application number: PCT/EP2008/064736
(87) International publication number: WO 2009/141017

(56) References cited:
- US-A- 4 252 850
- US-A- 5 067 207
- US-A- 5 311 648

## Description

### Field of invention

The present invention relates to a tarpaulin device for a tower section of a wind turbine according to the preamble of claim 1. Moreover, the present invention relates to a method of fixing a tarpaulin device to a tower section of a wind turbine, according to claim 10. A device of this type is known from US 5311648A.

### Art Background

During transportation of tower sections for wind turbines, the tower sections are generally covered at both ends with a tarpaulin to protect the inside of the tower sections from getting dirty and wet and to prevent corrosion. The tarpaulins are attached to each tower section. When the tower sections are attached to the transportation brackets the tarpaulins have to be fitted to the transportation bracket by cutting holes in the area of the transportation brackets to ensure an accessibility of the tower sections to the transportation brackets. The size of the holes to be cut into the tarpaulin differs depending on the used transportation bracket adapted for respective transportation means, such as ships, rail vehicles or trucks. Furthermore, the sizes of the cuts in the tarpaulin have to fit to the lifting equipment for lifting the brackets from one location to the other.

### Summary of the Invention

It may be an object of the invention to provide a proper tarpaulin device for a tower section of a wind turbine.

This object may be solved by a tarpaulin device for a tower section of a wind turbine and by a method of fixing a tarpaulin device to a tower section of a wind turbine according to the subject-matter of the independent claims.

According to the present invention, a tarpaulin device for a tower section of a wind turbine is provided. The tarpaulin device comprises an adjustable opening, wherein a location and/or a size of the adjustable opening in the tarpaulin device are/is adaptable to a functional element of the tower section.

According to the present invention a method of fixing a tarpaulin device to a tower section of a wind turbine is provided. A location and a size of an adjustable opening in the tarpaulin device is adapted to a functional element of the tower section.

The term "functional element" may denote an additional element connected to the tower section, such as a mounting bracket or a lifting mechanic. The functional elements may be connected removably to the tower section or may be a part of the tower section itself. Furthermore, the functional elements extend from the inside of the tarpaulin device, such as from the surface of the tower section or the inside of the tower section, to the outside of the tarpaulin device for getting in functional contact with other transportation mechanics, such as transportation trains or fixing elements of transportation means.

The term "tarpaulin device" may denote a protecting foil or other flexible materials that cover an open end of a tower section and is for instance fixed to an edge or a margin of the tower section.

The term "adjustable opening" may denote an opening of the tarpaulin device through which the functional element may extend.

In conventional tarpaulins cut holes are cut in the tarpaulin device by a sharp element, wherein the cut holes may be uneven and in an indefinable length. Furthermore, the cut holes are oftentimes made bigger than necessary. Moreover, when cutting the tarpaulins, the tarpaulins can therefore not be used again for other transportation devices or for other tower sections. Furthermore, the cut holes may be torn bigger by wind during transportation. The larger the holes are cut during transportation the more dirt enters into the tower sections and cleaning of the tower sections is required before the tower sections are ready to be used on the site.

By using the tarpaulin device with its adjustable openings, that are necessary for providing an access to the functional element, it may be adjusted more precisely with respect to a variety of different sized functional elements. Thus, a reduced space between the adjustable openings and the functional elements is provided, so that dirt may be prevented from entering. Furthermore, when the adjustable openings seal the inside of the tower section, no wind force due to air stream enters the openings, because the air stream will be guided around the tower section. Thus, no flattering of the tarpaulin device due to air stream occurs and a risk of damage of the tarpaulin device will be reduced. Moreover, when providing an adjustable opening, the edges of the adjustable openings may be selectively reinforced in comparison to an undefined cut in the tarpaulin device. Thus, a more precise and maintainable adjustable opening may be provided.

According to an embodiment of the invention, the adjustable opening is provided by a rib section in the tarpaulin device. The length of the rib section is therefore adjustable. By providing a rib section, the size respectively the maximum length of the rib may be predefined. In contrary to cutting a cut into the tarpaulin device, the cut length would increase when a stress, such as stress by wind force, would be exerted to the tarpaulin device. When using a predefined rib section, the ends of the rib sections may be selectively reinforced, so that an unintended increase of the rib section due to stress may be prevented and a more stable tarpaulin device may be provided.

According to the invention, the tarpaulin device further comprises a flap element for opening and closing the adjustable opening. By using the flap element, the adjustable opening may be opened when needed. When an adjustable opening is not needed, the adjustable opening may be closed by the flap element. Thus, the tarpaulin device may comprise a plurality of adjustable openings for a variety of different shaped functional elements, wherein only the active adjustable openings, namely these openings through which a functional element is extending, are adjustably opened by the flap element. Thus, the tarpaulin device may be adapted for a plurality of different shaped tower sections and/or functional elements without providing an unintended opening through which dirt may enter to the inside of a tower section. Thus, flexibility is provided without increasing the risk of an entering of dirt.

According to the invention, the flap element is divided in sub flap elements, such that a desired pattern of a variety of differently shaped adjustable openings may be provided. The strip line of each sub flap element may extend in different directions and thus create an individual pattern of differently shaped sub flap elements. Because each sub flap element is removable individually, the shape of the adjustable opening covered by the flap elements or the sub flap elements may individually adapted to the functional elements. Thus, a higher flexibility of the adjustable openings may be provided.

According to a further embodiment of the invention, the flap element is removably fixed to the tarpaulin device. The flap element may be connected with one contact side to the tarpaulin device, so that the flap element may be folded when a covered adjustable opening is needed. The folded flap element is in general not fixed, so that by wind forces the flap element is flittering around and may be damaged or may damage the functional element or the tower section. Thus, when removing the flap element, a flittering of the flap element may be prevented and a damage of the flap element may be reduced. Thus, the flap element is fixed to the tarpaulin device removably, i.e. all connecting flanges of the flap element are removably fixable to the tarpaulin device and do not comprise any irremovable connections.

According to a further embodiment, the tarpaulin device comprises furthermore a Velcro element for adjustably opening and closing the adjustable opening. By using Velcro elements a flexible opening of the adjustable openings may be provided. The Velcro elements may be used for adjustably opening and closing the rib sections or for opening and closing the flap elements. Furthermore, by using the Velcro element, a very quick adjustment of the adjustable openings to the different sizes of the functional elements may be provided, so that the tarpaulin device and the functional elements may be installed easily.

According to a further embodiment, the tarpaulin device further comprises a zip fastener element for adjustably opening and closing the adjustable opening. Furthermore, according to a further embodiment, the tarpaulin device further comprises a button stay element for adjustably opening and closing the adjustable opening. By opening a zip fastener element or a button stay element, a more rigid but flexible connection of the rib sections or of the flap elements may be provided, so that when stress is exerted to the tarpaulin device, an unintentional opening of the adjustable openings may be prevented.

According to a further embodiment, the tarpaulin device furthermore comprises reinforced sections located at least partially around the adjustable opening. A reinforced section may be provided by a thicker material section of the tarpaulin device, for instance. Furthermore, the reinforced section may be provided by adding another material which comprises stronger material characteristics than the material of the tarpaulin device. Thus, the life-time of the whole tarpaulin device may be increased because the adjustable openings are the most critical parts for breaking down. Thus, when reinforcing the critical locations, i.e. the adjustable openings of the tarpaulin device, the overall life-time of a tarpaulin device may be increased.

According to a further embodiment of the tarpaulin device, a plurality of adjustable openings may be provided. Thus, a high flexibility of a variety of different functional elements, such as transportation fixtures or mounting bracket devices, may be provided. Thus, the tarpaulin device may be used for a variety of different tower sections and different kinds of functional elements repeatedly.

According to a further embodiment, a connecting element for connecting the tarpaulin device to the tower section may be provided. The connecting element may comprise a thread eye in the tarpaulin device or an ear in the tower section. Furthermore, the tarpaulin device may comprise at its edges a connecting wire. The edges of the tarpaulin device may be wrapped over the flanges or edges of the tower section and then fixed with a rope, for instance. Furthermore, the connecting element of the tarpaulin device may comprise an elastic material, so that the tarpaulin device may be wrapped over the tower sections, so that the elastic material stretches and a press fit connection is provided.

According to a further embodiment of the method, the tarpaulin device is attached to the tower section of the wind turbine and the functional element is mounted to the tower section in the region of the adjustable opening. Thus, the tower sections may first of all covered with the tarpaulin device before being mounted to a functional element, such as a bracket device for transportation. Thus, when storing the tower section before transportation, dirt prevention may be provided. In praxis, before transporting the tower section, the tower section is often times stored for weeks or months. During this time period the tarpaulin device may already provide protection against dirt. When the tower section is finally transported, the functional elements, such as the transporting bracket devices may be fixed to the tower section. Therefore, the adjustable openings of the tarpaulin device may adjustably be opened and adapted to the length and to the contact location may be adjusted.

With the present invention tarpaulins with adjustable openings are provided wherein the adjustable openings may be located in the areas where the tower sections are mounted to transporting bracket devices and to lifting components, for instance. The adjustable openings may be opened and closed by Velcro elements, for instance. Thus, the adjustable openings may be adjusted very precisely to the bracket devices which are to be mounted onto the tower sections. The present invention may also comprise a plurality of adjustable openings that may be covered by a plurality of flap elements and sub flap elements. Hence, the tarpaulin element provides a more precise adjustable opening and is also more stable, because the openings will not be torn larger by the wind force during transportation, for instance. Furthermore, less cleaning of the inside of the tower sections is necessary after the transportation due to a better fitting of the adjustable openings to the functional elements, for instance. Moreover, by providing the adjustable openings, the tarpaulins may also be reused for other transportation unit or for other tower sections.

It has to be pointed out that of course any combination of features relating to different subject matters is also possible.

It has to be noted that embodiments of the invention have been described with reference to different subject matters.

In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The invention will be described in more detail hereinafter with reference to the examples of embodiments but to which the invention is not limited:
Fig. 1 shows a conventional tarpaulin for a tower section;
Fig. 2 shows a schematic view of a tarpaulin device according to an exemplary embodiment of the present invention.

### Detailed Description

The illustration in the drawing is schematically. It is noted that in different figures, similar or identical elements are provided with the same reference signs or with reference signs, which are different from the corresponding reference signs only within the first digit.

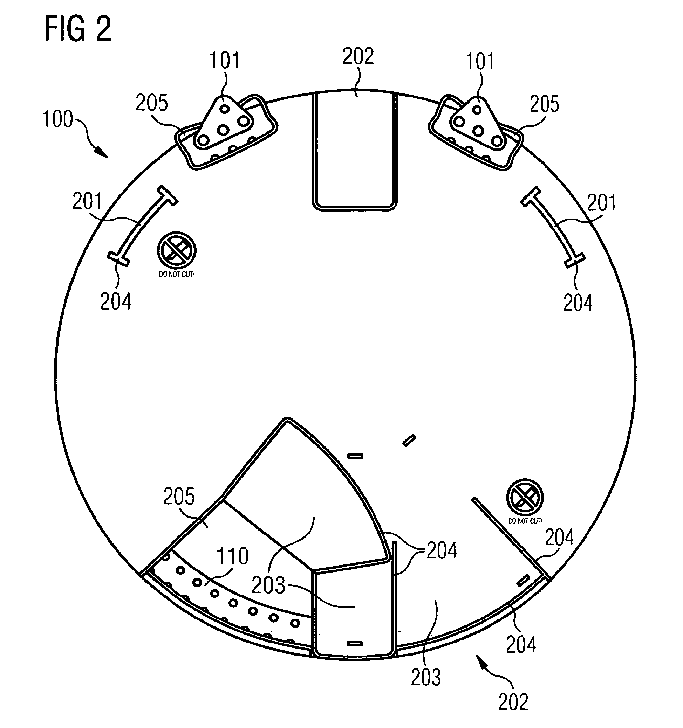

Fig. 2 illustrates an exemplary embodiment of the present invention. A tarpaulin device 100 for a tower section 110 of a wind turbine is provided. The tarpaulin device 100 comprises an adjustable opening 200. A location and a size of the adjustable opening 205 in the tarpaulin device 100 are adaptable to a functional element 101 of the tower section 110.

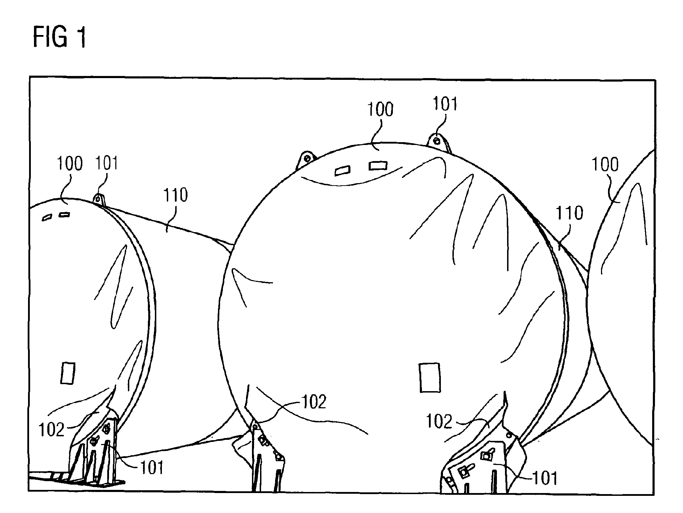

Fig. 1 illustrates a conventional tarpaulin device 100. The tarpaulin device 100 is wrapped over an open end of the tower section 110. Through the tarpaulin device 100, functional elements 101 are extending. The openings for the functional elements 101 are cut for instance by a sharp tool, such as a knife. As can be seen from Fig. 1, the openings respectively the tarpaulin cuts 102 are not adjusted to the functional elements 101 precisely. Thus, space is provided through which dirt may be entered into the inside of the tower section 110. As can furthermore be seen from the cut tarpaulin device 100, the tarpaulin cut 102 may be torn off unintentionally for instance by a wind force.

Fig. 2 illustrates an exemplary embodiment of the present invention. The tarpaulin device 100 comprises rib sections 201 and flap elements 202 that may provide the adjustable openings 205. Through the adjustable openings 205 the functional elements 101 extend. Inside the tarpaulin device 100 the tower section 110 is located. The rib sections 201 are shown exemplary in a closed position in Fig. 2. The rib sections 201 may be closed by a Velcro element 204, for instance. Also bottom stay elements or zip fastener elements may be used.

Furthermore, Fig. 2 illustrates a plurality of flap elements 202. Each of the flap elements 202 may open and close the adjustable opening 205 e.g. by Velcro elements 204. A plurality of sub flap elements 203 may flexibly cover the adjustable openings 205, so that the tarpaulin device 100 may be flexibly adjusted with its adjustable openings 205 to a variety of different shaped functional elements 101.

As can be seen from Fig. 2, the functional elements 101 may comprise transporting elements that extend through tarpaulin device 100 upwardly, so that e.g. a crane may lift the tower section 110. At the base section of the tarpaulin device 100 the flap element 202, i.e. the sub flap elements 203, may be opened individually, so that for instance a mounting bracket may be connected to the tower section 110. Furthermore, Fig. 2 furthermore illustrates a flap element 202 in a closed position of the tarpaulin device 100.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: tarpaulin device
- 101: functional element
- 102: tarpaulin cut

- 110: tower section

- 201: rip section
- 202: flap element
- 203: sub flap element
- 204: Velcro element
- 205: adjustable opening

## Claims

1. A tarpaulin device for a tower section (110) of a wind turbine, the tarpaulin device comprising an adjustable opening (205) and a flap element (202) for opening and closing the adjustable opening (205), and
wherein the location and/or the size of the adjustable opening (205) in the tarpaulin device (100) are/is adaptable to a functional element (101) of the tower section (110); **characterised in that**
the flap element (202) is divided in sub flap elements (203), each of them being removable individually in such a way that by removing one or more sub flap elements (203) a desired shape of the adjustable opening (205) is provided.

2. The tarpaulin device of claim 1,
wherein the adjustable opening (205) is provided by a rip section (201) in the tarpaulin device (100), and
wherein the length of the rip section (201) is adjustable.

3. The tarpaulin device of claim 1 or 2,
wherein the flap element (202) is removably fixed to the tarpaulin device (100).

4. The tarpaulin device of one of claims 1 to 3,
further comprising a Velcro element (204) for adjustably opening and closing the adjustable opening (205).

5. The tarpaulin device of one of claims 1 to 4,
further comprising zip fastener elements for adjustably opening and closing the adjustable opening (205).

6. The tarpaulin device of one of claims 1 to 5,
further comprising button stay elements for adjustably opening and closing the adjustable opening (205).

7. The tarpaulin device of one of claims 1 to 6, further comprising a reinforced section located at least partially around the adjustable opening (205).

8. The tarpaulin device of one of claims 1 to 7, further comprising:
a plurality of adjustable openings (205).

9. The tarpaulin device of one of claims 1 to 8, further comprising:
a connecting element for connecting the tarpaulin device (100) to the tower section (110).

10. A method of fixing a tarpaulin device (100) to a tower section (110) of a wind turbine, the method comprising
adapting a location and a size of an adjustable opening (205) in the tarpaulin device (100) to a functional element (101) of the tower section (110) by
individually removing one or more sub flap elements (203) of a flap element (202) for providing a desired shape of the adjustable opening (205).

11. The method of claim 10, further comprising
attaching the tarpaulin device (100) to the tower section (110) of the wind turbine, and
mounting the functional element (101) to the tower section (110) in the region of the adjustable opening.

## Patentansprüche

1. Planenvorrichtung für einen Turmabschnitt (110) einer Windkraftanlage, wobei die Planenvorrichtung eine einstellbare Öffnung (205) und ein Klappenelement (202) zum Öffnen und Schließen der einstellbaren Öffnung (205) umfasst, und
wobei die Position und/oder die Größe der einstellbaren Öffnung (205) in der Planenvorrichtung (100) an ein Funktionselement (101) des Turmabschnitts (110) anpassbar sind/ist;
**dadurch gekennzeichnet, dass** das Klappenelement (202) in Unterklappenelemente (203) aufgeteilt ist, wobei jedes von ihnen individuell entfernbar ist, derart, dass durch Entfernen eines oder mehrerer Unterklappenelemente (203) eine gewünschte Form der einstellbaren Öffnung (205) hergestellt wird.

2. Planenvorrichtung nach Anspruch 1,
wobei die einstellbare Öffnung (205) von einem Auftrennabschnitt (201) in der Planenvorrichtung (100) bereitgestellt wird, und
wobei die Länge des Auftrennabschnitts (201) einstellbar ist.

3. Planenvorrichtung nach Anspruch 1 oder 2,
wobei das Klappenelement (202) lösbar an der Planenvorrichtung (100) befestigt ist.

4. Planenvorrichtung nach einem der Ansprüche 1 bis 3,
welche ferner ein Klettelement (204) zum einstellbaren Öffnen und Schließen der einstellbaren Öffnung (205) umfasst.

5. Planenvorrichtung nach einem der Ansprüche 1 bis 4,
welche ferner Reißverschlusselemente zum einstellbaren Öffnen und Schließen der einstellbaren Öffnung (205) umfasst.

6. Planenvorrichtung nach einem der Ansprüche 1 bis 5,
welche ferner Knopfleistenelemente zum einstellbaren Öffnen und Schließen der einstellbaren Öffnung (205) umfasst.

7. Planenvorrichtung nach einem der Ansprüche 1 bis 6,
welche ferner einen verstärkten Abschnitt umfasst, der wenigstens teilweise um die einstellbare Öffnung (205) herum angeordnet ist.

8. Planenvorrichtung nach einem der Ansprüche 1 bis 7, welche ferner umfasst:
eine Vielzahl von einstellbaren Öffnungen (205).

9. Planenvorrichtung nach einem der Ansprüche 1 bis 8, welche ferner umfasst:
ein Verbindungselement zum Verbinden der Planenvorrichtung (100) mit dem Turmabschnitt (110).

10. Verfahren zum Befestigen einer Planenvorrichtung (100) an einem Turmabschnitt (110) einer Windkraftanlage, wobei das Verfahren umfasst:
Anpassen einer Position und einer Größe einer einstellbaren Öffnung (205) in der Planenvorrichtung (100) an ein Funktionselement (101) des Turmabschnitts (110) durch individuelles Entfernen eines oder mehrerer Unterklappenelemente (203) eines Klappenelements (202) zum Herstellen einer gewünschten Form der einstellbaren Öffnung (205).

11. Verfahren nach Anspruch 10, welches ferner umfasst:
Befestigen der Planenvorrichtung (100) an dem Turmabschnitt (110) der Windkraftanlage, und
Anbringen des Funktionselements (101) an dem Turmabschnitt (110) im Bereich der einstellbaren Öffnung.

## Revendications

1. Dispositif de bâche pour une section de tour (110) d'une éolienne, le dispositif de bâche comprenant une ouverture ajustable (205) et un élément de rabat (202) pour ouvrir et fermer l'ouverture ajustable (205), et
dans lequel l'emplacement et/ou la taille de l'ouverture ajustable (205) dans le dispositif de bâche (100) sont/est adaptable(s) à un élément fonctionnel (101) de la section de tour (110) ;
**caractérisé en ce que** l'élément de rabat (202) est divisé en sous-éléments de rabat (203), chacun d'entre eux étant amovible individuellement, de telle manière que, en enlevant un ou plusieurs sous-élément(s) de rabat (203), une forme désirée de l'ouverture ajustable (205) est obtenue.

2. Dispositif de bâche selon la revendication 1,
dans lequel l'ouverture ajustable (205) est prévue par une section d'arrachement (201) dans le dispositif de bâche (100), et
dans lequel la longueur de la section d'arrachement (201) est ajustable.

3. Dispositif de bâche selon la revendication 1 ou 2,
dans lequel l'élément de rabat (202) est fixé de manière amovible au dispositif de bâche (100).

4. Dispositif de bâche selon l'une quelconque des revendications 1 à 3,
comprenant en outre un élément en Velcro (204) pour ouvrir et fermer de manière ajustable l'ouverture ajustable (205).

5. Dispositif de bâche selon l'une quelconque des revendications 1 à 4,
comprenant en outre des éléments de fermeture à glissière pour ouvrir et fermer de manière ajustable l'ouverture ajustable (205).

6. Dispositif de bâche selon l'une quelconque des revendications 1 à 5,
comprenant en outre des éléments à bouton pour ouvrir et fermer de manière ajustable l'ouverture ajustable (205).

7. Dispositif de bâche selon l'une quelconque des revendications 1 à 6, comprenant en outre une section renforcée située au moins partiellement autour de l'ouverture ajustable (205).

8. Dispositif de bâche selon l'une quelconque des revendications 1 à 7, comprenant en outre :
une pluralité d'ouvertures ajustables (205).

9. Dispositif de bâche selon l'une quelconque des revendications 1 à 8, comprenant en outre :
un élément de connexion pour connecter le dispositif de bâche (100) à la section de tour (110).

10. Procédé de fixation d'un dispositif de bâche (100) sur une section de tour (110) d'une éolienne, le procédé comprenant
l'adaptation d'un emplacement et d'une taille d'une ouverture ajustable (205) dans le dispositif de bâche (100) à un élément fonctionnel (101) de la section de tour (110) en
enlevant individuellement un ou plusieurs sous-élément(s) de rabat (203) d'un élément de rabat (202) pour obtenir une forme désirée de l'ouverture ajustable (205).

11. Procédé selon la revendication 10, comprenant en outre
la fixation du dispositif de bâche (100) à la section de tour (110) de l'éolienne, et
le montage de l'élément fonctionnel (101) sur la section de tour (110) dans la région de l'ouverture ajustable.
